# EUROPÄISCHE PATENTSCHRIFT

(11) **EP 3 201 140 B1**
(45) Veröffentlichungstag und Bekanntmachung des Hinweises auf die Patenterteilung: **18.07.2018**
(21) Anmeldenummer: 15820833.0
(22) Anmeldetag: 18.12.2015
(51) Int. Cl.: C02F 1/44, B01D 61/00, F03G 7/00, F03G 7/04

(54) **VERFAHREN ZUM BETREIBEN EINES OSMOSEKRAFTWERKS UND OSMOSEKRAFTWERK**
METHOD FOR OPERATING AN OSMOTIC POWER PLANT, AND OSMOTIC POWER PLANT
PROCÉDÉ POUR FAIRE FONCTIONNER UNE CENTRALE D'ÉNERGIE OSMOTIQUE ET CENTRALE D'ÉNERGIE OSMOTIQUE

(30) Priorität: 12.01.2015 DE 102015200250
(43) Veröffentlichungstag der Anmeldung: 09.08.2017
(73) Patentinhaber: Siemens Aktiengesellschaft, 80333 München (DE)
(72) Erfinder: ZIEGMANN, Markus, 91083 Baiersdorf (DE)
(86) Internationale Anmeldenummer: PCT/EP2015/080393
(87) Internationale Veröffentlichungsnummer: WO 2016/113070

(56) Entgegenhaltungen:
- WO-A2-2008/060435
- US-A- 4 193 267
- SHIHONG LIN ET AL: "Hybrid Pressure Retarded Osmosis-Membrane Distillation System for Power Generation from Low-Grade Heat: Thermodynamic Analysis and Energy Efficiency", ENVIRONMENTAL SCIENCE & TECHNOLOGY, Bd. 48, Nr. 9, 6. Mai 2014 (2014-05-06), Seiten 5306-5313, XP055249369, US ISSN: 0013-936X, DOI: 10.1021/es405173b
- MCGINNIS ET AL: "A novel ammonia-carbon dioxide osmotic heat engine for power generation", JOURNAL OF MEMBRANE SCIENCE, ELSEVIER BV, NL, Bd. 305, Nr. 1-2, 6. Oktober 2007 (2007-10-06), Seiten 13-19, XP022288003, ISSN: 0376-7388, DOI: 10.1016/J.MEMSCI.2007.08.027
- ALTAEE ALI ET AL: "Pressure retarded osmosis: advancement in the process applications for power generation and desalination", DESALINATION, ELSEVIER, AMSTERDAM, NL, Bd. 356, 11. Oktober 2014 (2014-10-11), Seiten 31-46, XP029115475, ISSN: 0011-9164, DOI: 10.1016/J.DESAL.2014.09.028
- BRUCE E. LOGAN ET AL: "Membrane-based processes for sustainable power generation using water", NATURE, Bd. 488, Nr. 7411, 15. August 2012 (2012-08-15), Seiten 313-319, XP055248832, United Kingdom ISSN: 0028-0836, DOI: 10.1038/nature11477
- ACHILLI A ET AL: "Selection of inorganic-based draw solutions for forward osmosis applications", JOURNAL OF MEMBRANE SCIENCE, ELSEVIER BV, NL, Bd. 364, Nr. 1-2, 15. November 2010 (2010-11-15), Seiten 233-241, XP027450297, ISSN: 0376-7388, DOI: 10.1016/J.MEMSCI.2010.08.010 [gefunden am 2010-08-14]

## Beschreibung

Die Erfindung betrifft ein Verfahren zum Betreiben eines Osmosekraftwerks. Hierbei werden eine erste Lösung mit einer ersten Konzentration wenigstens einer in einem Lösungsmittel der Lösung lösbaren Substanz und eine zweite Lösung bereitgestellt. Die zweite Lösung weist eine zweite, geringere Konzentration der wenigstens einen Substanz auf. Zumindest die erste Lösung wird mittels wenigstens einer thermischen Trenneinrichtung bereitgestellt. Des Weiteren betrifft die Erfindung ein Osmosekraftwerk.

Osmosekraftwerke oder Osmosespeicherkraftwerke sind zurzeit Gegenstand intensiver Forschung, und einige wenige Pilotanlagen sind betriebsbereit. Bei einem im Osmosekraftwerk stattfindenden Prozess zur Energiegewinnung wird eine Umkehrosmose oder eine Elektrodialyse rückwärts betrieben. Die Umkehrosmose ist beispielsweise aus der Trinkwasseraufbereitung bekannt. Dieser umgekehrte Prozess der Umkehrosmose wird im Englischen mit Pressure Retarded Omosis (PRO) bezeichnet, also als "druckverzögerte Osmose". Demgegenüber wird die umgekehrt stattfindende Elektrodialyse im englischen als Reversed Electrodialysis (RED) bezeichnet, also als "umgekehrte Elektrodialyse".

Bei diesen Prozessen wird die Energie in Form der Gibbs-Energie oder freien Enthalpie genutzt, welche beim Mischungsprozess zwischen einer niedrig konzentrierten Lösung oder einer hoch konzentrierte Lösung frei wird. Demgegenüber wird bei der Umkehrosmose oder bei der Elektrodialyse unter Einsatz von Energie eine Fremdstoffe enthaltende Lösung, wie beispielsweise Wasser mit den Fremdstoffen in Form von Salzen aufgetrennt, und zwar in eine niedrig konzentrierte Lösung in Form von sauberem Wasser und in eine hoch konzentrierte Lösung, in welcher die Fremdstoffe angereichert sind.

Interessante Standorte für Osmosekraftwerke sind Flussmündungen, Salzkavernen oder dergleichen, da hier hoch konzentrierte Lösungen und niedrig konzentrierte Lösungen in großen Mengen zur Verfügung stehen. Hierbei ist der Prozess aufgrund der notwendigen Rahmenbedingungen jedoch sehr stark an den Standort gebunden.

Es besteht jedoch die Möglichkeit, beide Teilprozesse oder Richtungen zu kombinieren, also etwa die Umkehrosmose und druckverzögerte Osmose einerseits, die Elektrodialyse und die umgekehrte Elektrodialyse andererseits oder Kombinationen dieser Teilprozesse. So ergibt sich ein Kreisprozess und somit eine Möglichkeit zur Speicherung von Energie in einem so genannten Osmosespeicher. Wenn jedoch zur Auftrennung oder Regeneration der Arbeitslösung Membranprozesse wie die Umkehrosmose oder die Elektrodialyse zum Einsatz kommen, so lassen sich lediglich schlechte Wirkungsgrade erreichen. Dies liegt an Limitierungen bei der Aufkonzentrierung der hoch konzentrierten Lösung, welche ihre Ursache in auch als Scaling bezeichneten anorganischen Ablagerungen oder in auch als Fouling bezeichneten organischen Verschmutzungen und in einer Konzentrationspolarisation haben können. Dies führt dazu, dass sich insgesamt nur Strom-zu-Strom-Wirkungsgrade von maximal 10 % realisieren lassen. Dies ist für den Betrieb eines Osmosekraftwerks ungünstig.

Werden jedoch thermische Prozesse genutzt, welche aus der Wasseraufbereitung bekannt sind und welche etwa die Vakuumdestillation für die Bereitstellung hoch konzentrierter Lösungen umfassen, so sind die vorstehend genannten Limitierungen deutlich geringer. Zur Auftrennung einer Salzlösung über die Verdunstung von Wasser sind jedoch aufgrund des hohen Siedepunkts von Wasser sowie dessen hoher Wärmekapazität und hoher Verdampfungsenthalpie große Energiemengen nötig.

In "Shihong Lin et al.: Hybrid Pressure Retarded Osmosis-Membrane Distillation System for Power Generation from Low-Grade Heat: Thermodynamic Analysis and Energy Efficiency", Environmental Science & Technology, Bd. 48, Nr. 9, 6. Mai 2014 (2014-05-06), Seiten 5306-5313, XP055249369, US; ISSN: 0013-936X, DOI: 10.1021/es405173b" ist eine osmotische Wärmekraftmaschine beschrieben, bei welcher eine hochkonzentrierte Ammoniumcarbonatlösung einem PRO-Modul zugeführt wird, also einem Modul, in welchem eine druckverzögerte Osmose oder Pressure Retarded Osmosis stattfindet. Die Arbeitslösungen werden mittels eines Membrandestillationsmoduls bereitgestellt.

Die WO 2008/060435 A2 beschreibt eine osmotische Wärmekraftmaschine.

Die US 4,193,267 A beschreibt eine Vorrichtung zur Stromerzeugung mittels druckverzögerter Osmose.

Bei der Vakuumdestillation oder der Membrandestillation kann zwar gegenüber der herkömmlichen Destillation bei niedrigeren Temperaturen gearbeitet werden. Insbesondere aufgrund des Vorsehens des Unterdrucks können hier also Abwärmequellen auf vergleichsweise niedrigem Temperaturniveau genutzt werden.

So wie bei dem herkömmlichen Prozess einer thermischen Wasseraufbereitung oder Trinkwasseraufbereitung weist jedoch auch dieser Prozess den Nachteil auf, dass hohe Anforderungen an die Gasdichtheit einer Anlage gestellt werden, in welcher die Vakuumdestillation stattfinden soll. Dies führt zu vergleichsweise hohen Investitionskosten und Wartungskosten. Außerdem ist Prozessdampf oder ein großer elektrischer Energiebedarf für die Aufrechterhaltung des Vakuums nötig. Dies wirkt sich wiederum negativ auf die Betriebskosten der Anlage aus.

Aufgabe der vorliegenden Erfindung ist es daher, ein Verfahren und ein Osmosekraftwerk der eingangs genannten Art zu schaffen, welches besonders aufwandsarm ist.

Diese Aufgabe wird durch ein Verfahren mit den Merkmalen des Patentanspruchs 1 und durch ein Osmosekraftwerk mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Betreiben eines Osmosekraftwerks werden eine erste Lösung mit einer ersten Konzentration wenigstens einer in einem Lösungsmittel der ersten Lösung lösbaren Substanz und eine zweite Lösung bereitgestellt. Die zweite Lösung weist eine zweite, geringere Konzentration der wenigstens einen Substanz auf. Zumindest die erste Lösung wird mittels wenigstens einer thermischen Trenneinrichtung bereitgestellt. In der wenigstens einen thermischen Trenneinrichtung wird eine Ausgangslösung, welche die wenigstens eine Substanz enthält, in einen Verdunster eingebracht, welcher von einem gasförmigen Medium durchströmt wird. Das gasförmige Medium strömt im Verdunster der Ausgangslösung entgegen, sodass das Lösungsmittel der Ausgangslösung und das gasförmige Medium in dem Verdunster einen Gegenstrom-Wärmetauscher bilden. Die wenigstens eine Substanz wird mittels des gasförmigen Mediums aus dem Verdunster abgeführt. Die wenigstens eine in dem gasförmigen Medium abgeführte Substanz wird in einem Kondensator der wenigstens einen thermischen Trenneinrichtung in eine Flüssigphase überführt, um die erste Lösung bereitzustellen. Hierbei wird in der Ausgangslösung als die wenigstens eine Substanz eine derartige verwendet, welche sich leichter in die Gasphase überführen lässt als das Lösungsmittel der Ausgangslösung.

Dem liegt die Erkenntnis zugrunde, dass sich zur thermischen Auftrennung eines Gemisches, dessen hoch konzentrierte und niedrig konzentrierte Lösungen zur Speicherung von Energie nach dem Prinzip eines osmotischen Speichers verwendet werden können, eine derart betriebene thermische Trenneinrichtung besonders gut eignet. Dadurch, dass die wenigstens eine Substanz ein höheren, insbesondere deutlich höheren Dampfdruck und eine geringere Verdampfungsenthalpie als das Lösungsmittel aufweist, lässt sich nämlich in der thermischen Trenneinrichtung die wenigstens eine Substanz besonders einfach in die Gasphase überführen, welche dann mit dem gasförmigen Medium aus dem Verdunster abgeführt werden kann. Es kommt also in der Ausgangslösung wenigstens eine Substanz zum Einsatz, welche flüchtig ist beziehungsweise in eine flüchtige Form überführt werden kann, indem der Ausgangslösung, welche die wenigstens eine Substanz enthält, Wärme zugeführt wird.

Dadurch, dass sich die wenigstens eine Substanz leichter in die Gasphase überführen lässt als das Lösungsmittel der Ausgangslösung, kann auch schon bei Temperaturen deutlich unterhalb des Siedepunkts des Lösungsmittels die wenigstens eine Substanz in eine flüchtige Form überführt und somit mit dem gasförmigen Medium aus dem Verdunster ausgetragen werden.

Es wird also kaum oder lediglich in untergeordnetem Maße das Lösungsmittel in die Gasphase überführt, jedoch insbesondere und besonders leicht die wenigstens eine in dem Lösungsmittel gelöste Substanz.

Die in der Ausgangslösung gelöste Substanz geht also im Verdunster in die Gasphase über und wird anschließend im Kondensator wieder kondensiert. Durch die leichtere Überführbarkeit in die Gasphase beziehungsweise größere Flüchtigkeit kann jedoch die wenigstens eine Substanz besonders leicht thermisch in der thermischen Trenneinrichtung abgetrennt werden. Damit lässt sich eine solche Ausgangslösung im Betrieb des Osmosekraftwerks besonders gut einsetzen. Das Verfahren ist daher besonders aufwandsarm.

Die in dem Osmosekraftwerk eingesetzte zweite Lösung braucht die wenigstens eine Substanz auch gar nicht zu enthalten.

Als vorteilhaft hat es sich gezeigt, dass in dem Kondensator die Ausgangslösung als Kühlmittel zum Kühlen des die wenigstens eine Substanz enthaltenden gasförmigen Mediums verwendet wird. Dann lässt sich nämlich die Ausgangslösung vorwärmen, bevor sie dem Verdunster zugeführt wird. Zugleich kann so das Überführen der wenigstens einen Substanz in die Flüssigphase in dem Kondensator besonders aufwandsarm bewerkstelligt werden. Eine derartige Prozessführung trägt daher zum besonders geringen Bedarf an thermischer Energie der thermischen Trenneinrichtung bei.

Hierbei hat es sich als vorteilhaft gezeigt, dass eine Temperatur der von dem Kondensator kommenden Ausgangslösung erhöht wird und die Ausgangslösung, welche die erhöhte Temperatur aufweist, im Gegenstrom zu dem gasförmigen Medium in dem Verdunster verrieselt wird. Durch das Erhöhen der Temperatur der Ausgangslösung eingangsseitig des Verdunsters kann ein regulierbarer Temperaturgradient zwischen der Ausgangslösung und dem gasförmigen Medium hergestellt werden, welches in den Verdunster eingebracht wird. So lässt sich ein vorteilhafter Temperaturgradient im Verdunster realisieren. Weiterhin ist dafür gesorgt, dass auf einer Höhe im Verdunster die Temperatur des gasförmigen Mediums stets niedriger ist als die der in den Verdunster eingebrachten Ausgangslösung auf dieser Höhe des Verdunsters. Damit erfolgt stets eine Wärmeübertragung von der fallenden Ausgangslösung auf das aufsteigende gasförmige Medium. Bei Einstellung eines hohen Temperaturgradienten lässt sich eine besonders weitgehende Überführung der wenigstens einen Substanz in das gasförmige Medium beim Verrieseln der Ausgangslösung in einem Verdunster mit geringer Oberfläche erreichen. Die Einstellung eines geringen Temperaturgradienten führt zu einer besonders hohen Effizienz beim Betrieb der thermischen Trenneinrichtung, allerdings ist dafür eine größere Verdunsteroberfläche notwendig.

Technisch besonders einfach und kostengünstig ist es, wenn als das Lösungsmittel der Ausgangslösung Wasser eingesetzt wird. Als die wenigstens eine Substanz kann hierbei insbesondere Ammoniumcarbonat verwendet werden. Im Wasser liegen dann nämlich Ammoniumionen, Carbonationen und andere ionische, gut lösliche Verbindungen vor. Diese ionische Verbindungen zerfallen jedoch bei Temperaturen oberhalb von 60 °C wieder in Ammoniak und Kohlendioxid. Ammoniak und Kohlendioxid lassen sich jedoch sehr gut zusammen mit dem gasförmigen Medium aus dem Verdunster abführen. Zudem lassen sich der Ammoniak und das Kohlendioxid bei einem Absenken der Temperatur im Kondensator wieder besonders gut in eine Flüssigphase überführen, etwa indem Ammoniumionen und Carbonationen sich in dem Wasser lösen, welches zusammen mit dem gasförmigen Medium als Wasserdampf aus dem Verdunster abgeführt wird.

Das System aus Ammoniak und Kohlendioxid stellt daher eine Stoffkombination oder Substanzkombination dar, welche besonders gut bei dem Verfahren eingesetzt werden kann, etwa indem Ammoniumcarbonat als die wenigstens eine Substanz in der Ausgangslösung verwendet wird. Vorteilhaft ist hierbei, dass sich sowohl der Ammoniak als auch das Kohlendioxid besonders einfach zusammen mit dem gasförmigen Medium aus dem Verdunster abführen lassen.

Es wird jedoch mittels der thermischen Trenneinrichtung nicht das Wasser in reines Produktwasser einerseits und Restwasser mit höherem Ionengehalt andererseits getrennt. Vielmehr wird der Wasserinhaltsstoff, nämlich das Ammoniumcarbonat, in der thermischen Trenneinrichtung von dem Lösungsmittel Wasser abgetrennt.

Zusätzlich oder alternativ zu Ammoniumcarbonat können jedoch auch weitere Substanzen verwendet werden, welche bei bestimmten Temperaturen, welche niedriger liegen als die Verdampfungstemperatur des Lösungsmittels, in flüchtige Substanzen überführt werden können. In Betracht kommen hierbei insbesondere Substanzen oder Verbindungen, die in Abhängigkeit von den Rahmenbedingungen von einer nicht flüchtigen in eine leicht flüchtige Spezies umgewandelt werden können. Beispielsweise können hier Säuren oder Basen zum Einsatz kommen und insbesondere schwache organische oder anorganische Säuren und/oder Basen. Die Säuren oder Basen sind nämlich in ihrer ungeladenen, also nicht-dissoziierten Form flüchtig, in ihrer ionisierten Form jedoch nicht flüchtig.

Im Falle einer Säure stellt etwa die nicht-dissoziierte und nicht hydratisierte Form die leicht flüchtige Spezies dar. Demgegenüber stellt die dissoziierte, geladene und im Lösungsmittel Wasser hydratisierte Form die nicht-flüchtige Spezies dar.

Insbesondere durch Überführen in die nicht-dissoziierte Form lässt sich daher die Säure oder Base besonders gut zusammen mit dem gasförmigen Medium aus dem Verdunster abführen und beim anschließenden Kondensieren in die Flüssigphase überführen. Auch derartige Substanzen sind einfach und kostengünstig verfügbar und somit für den Einsatz beim aufwandsarmen Betrieb der Trenneinrichtung gut einsetzbar. Dies gilt insbesondere für kleinmolekulare Basen oder Säuren, beispielsweise also für schwache organische Säuren wie Essigsäure und/oder Ameisensäure.

Zusätzlich oder alternativ kann als die wenigstens eine Substanz jedoch auch eine polare organische Verbindung zum Einsatz kommen, welche zwar in einem Lösungsmittel wie Wasser nicht dissoziiert, sich jedoch gut im Lösungsmittel lösen lässt. Dies gilt beispielsweise für Alkohole und insbesondere kurzkettige Alkohole wie Methanol, Ethanol und dergleichen. Derartige polare organische Verbindungen lassen sich also ohne eine Umwandlung in eine nicht-dissoziierte Spezies sehr einfach in der thermischen Trenneinrichtung thermisch abtrennen und anschließend in dem Kondensator wieder in die Flüssigphase überführen.

Bei Verwendung der wenigstens einen Säure oder Base als der wenigstens einen Substanz wird bevorzugt der pH-Wert in der wenigstens einen thermischen Trenneinrichtung derart eingestellt, dass im Verdunster zumindest bereichsweise ein größerer Anteil der wenigstens einen Säure oder Base in ihrer nicht-dissoziierten Form vorliegt als ohne das Einstellen des pH-Werts. Dem liegt die Erkenntnis zugrunde, dass der pH-Wert die relevante Rahmenbedingung für die Lage des Gleichgewichts zwischen der flüchtigen und der nicht-flüchtigen Form der Säure oder Base ist. Das Überführen etwa der Säure in die nicht-dissoziierte Form kann durch Protonierung der dissoziierten Form geschehen. So lässt sich einfach die nicht-flüchtige Form bereitstellen, indem der pH-Wert in der thermischen Trenneinrichtung abgesenkt wird.

Des Weiteren lässt sich durch Deprotonierung die Säure wieder besonders leicht in die Flüssigphase überführen. Durch das Einstellen des pH-Wertes im Verdunster lässt sich also eine besonders hohe Ausbeute beim Abführen der Säure oder Base zusammen mit dem gasförmigen Medium aus dem Verdunster sicherstellen.

In analoger Weise kann bei Verwendung einer Säure durch Deprotonierung im Kondensator dafür gesorgt werden, dass die Säure sich besonders leicht in die Flüssigphase überführen lässt. Entsprechend kann im Kondensator ein das Dissoziieren der Säure oder Base begünstigender pH-Wert eingestellt werden.

Der pH-Wert, bei welchem die dissoziierte und die nicht-dissoziierte Form der Säure oder Base in etwa gleich großen Konzentrationen vorliegen, wird durch den pK_{S}-Wert beziehungsweise pK_{B}-Wert der jeweiligen Säure oder Base charakterisiert. In Kenntnis der pKₛ-Werte beziehungsweise der pK_{B}-Werte der jeweils verwendeten Säuren und/oder Basen kann besonders gut der jeweils im Verdunster und/oder im Kondensator einzustellende pH-Wert bestimmt werden.

So kann beispielsweise der pH-Wert in dem Verdunster durch Zugabe einer weiteren Säure oder Base eingestellt werden, welche eine größere Säurestärke oder Basenstärke aufweist als die der wenigstens einen Substanz.

Als weiter vorteilhaft hat es sich gezeigt, wenn das Lösungsmittel nach einer Passage des Verdunsters auf eine Temperatur gekühlt wird, welche niedriger ist als die Temperatur des gasförmigen Mediums, welches vom Kondensator kommend im Bodenbereich in den Verdunster eingebracht wird. So lässt sich analog zum Verdunster ein vorteilhafter Temperaturgradient im Kondensator realisieren.

Bevorzugt wird die aus dem Verdunster abgeführte, in Bezug auf die wenigstens eine Substanz abgereicherte Ausgangslösung zum Bereitstellen der zweiten Lösung verwendet. So lässt sich besonders gut ein Kreislaufprozess realisieren, bei welchem in der thermischen Trenneinrichtung das Auftrennen der ersten und der zweiten Lösung stattfindet und anschließend mittels dieser beiden Lösungen im Osmosekraftwerk Energie gewonnen wird.

Vorteilhaft lässt sich die thermische Trenneinrichtung in einem Batchprozess betreiben, also in einem diskontinuierlichen Prozess. Hierbei wird zunächst eine bestimmte Menge der Ausgangslösung mittels der wenigstens einen thermischen Trenneinrichtung aufgetrennt und so die erste Lösung und die zweite Lösung bereitgestellt. Dann kann die in der ersten Lösung und in der zweiten Lösung enthaltene, durch das Mischen der beiden Lösungen wieder gewinnbare Energie unabhängig vom Bereitstellen der beiden Lösungen genutzt werden.

Vorteilhaft wird die wenigstens eine thermische Trenneinrichtung des Weiteren mit einem Druck betrieben, welcher einem Druck in der Umgebung der wenigstens einen thermischen Trenneinrichtung entspricht. Dies macht den Betrieb der thermischen Trenneinrichtung besonders aufwandsarm, da sowohl die Investitionskosten als auch die Betriebskosten deutlich geringer sind als bei einer thermischen Trenneinrichtung, in welcher bezogen auf den Druck in der Umgebung ein Unterdruck herrscht.

Als weiter vorteilhaft hat es sich gezeigt, wenn zumindest die erste Lösung mittels wenigstens zweier thermischer Trenneinrichtungen bereitgestellt wird, wobei die aus dem Kondensator einer ersten Trenneinrichtung stammende, in Bezug auf die wenigstens eine Substanz angereicherte Lösung dem Verdunster einer zweiten Trenneinrichtung als Ausgangslösung zugeführt wird. Durch ein solches Hintereinanderschalten von thermischen Trenneinrichtungen lässt sich eine besonders starke Aufkonzentrierung der ersten Lösung erreichen.

In analoger Weise kann auch die in Bezug auf die wenigstens eine Substanz abgereicherte Lösung weiter in der zweiten Trenneinrichtung behandelt werden, um eine besonders stark an der wenigstens einen Substanz verarmte oder besonders stark abgereicherte zweite Lösung bereitzustellen.

So lässt sich der Konzentrationsunterschied zwischen der ersten Lösung und der zweiten Lösung im Osmosekraftwerk besonders gut ausnutzen.

Schließlich hat es sich als vorteilhaft gezeigt, wenn die erste Lösung und die zweite Lösung einer Einrichtung zugeführt werden, in welcher mittels einer umgekehrten Elektrodialyse und/oder mittels einer druckverzögerten Osmose Energie gewonnen wird. So lässt sich nämlich besonders einfach die Ausgangslösung in einem Kreislauf nutzen, so dass das Verfahren besonders verlustarm ist.

Das erfindungsgemäße Osmosekraftwerk umfasst eine Einrichtung, welche einen ersten Einlass für eine erste Lösung einer ersten Konzentration wenigstens einer in einem Lösungsmittel der ersten Lösung lösbaren Substanz aufweist. Die Einrichtung weist einen zweiten Einlass für eine zweite Lösung auf, welche eine zweite, geringere Konzentration der wenigstens einen Substanz aufweist. Der erste Einlass ist mit einem ersten Vorratsbehältnis für die erste Lösung und der zweite Einlass mit einem zweiten Vorratsbehältnis für die zweite Lösung verbunden. Zumindest das erste Vorratsbehältnis ist mit wenigstens einer thermischen Trenneinrichtung verbunden. In einem Verdunster der wenigstens einen thermischen Trenneinrichtung sind eine die wenigstens eine Substanz enthaltende Ausgangslösung und ein gasförmiges Medium vorhanden. Das Lösungsmittel der Ausgangslösung und das gasförmige Medium bilden in dem Verdunster einen Gegenstrom-Wärmetauscher. Hierbei kann die wenigstens eine Substanz mittels des gasförmigen Mediums aus dem Verdunster abgeführt werden. Der Verdunster ist mit einem Kondensator der wenigstens einen thermischen Trenneinrichtung verbunden. In dem Kondensator ist die Ausgangslösung als Kühlmittel zum Kühlen des die wenigstens eine Substanz enthaltenden gasförmigen Mediums verwendbar. In einer Leitung, über welche die Ausgangslösung vom Kondensator hin zu dem Verdunster geleitet werden kann, ist ein Wärmeübertrager angeordnet, welcher dazu ausgebildet ist, eine Temperatur der von dem Kondensator kommenden Ausgangslösung zu erhöhen. Die Ausgangslösung, welche die erhöhte Temperatur aufweist, ist im Gegenstrom zu dem gasförmigen Medium in dem Verdunster verrieselbar. Der Kondensator ist dazu ausgebildet, die wenigstens eine in dem gasförmigen Medium abgeführte Substanz in eine Flüssigphase zu überführen, um die erste Lösung bereitzustellen. In der Ausgangslösung ist als die wenigstens eine Substanz eine derartige vorhanden, welche sich leichter in die Gasphase überführen lässt als das Lösungsmittel der Ausgangslösung.

Ein solches Osmosekraftwerk ist besonders aufwandsarm, da sich die wenigstens eine Substanz mittels der thermischen Trenneinrichtung unter besonders geringem Energiebedarf abtrennen lässt, um die erste Lösung bereitzustellen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- FIG 1: stark schematisiert ein Osmosekraftwerk, bei welchem zum Bereitstellen zweier Lösungen mit unterschiedlichen Konzentrationen einer gelösten Substanz eine thermische Trenneinrichtung zum Einsatz kommt; und
- FIG 2: schematisch die thermische Trenneinrichtung.

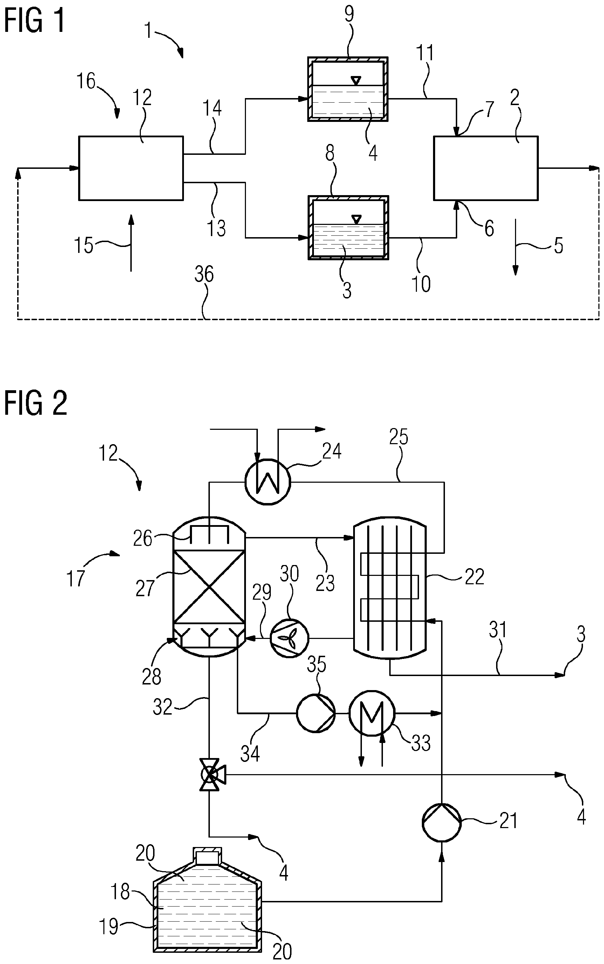

Ein in FIG 1 gezeigtes Osmosekraftwerk 1 umfasst eine Einrichtung 2 zur Energiegewinnung. Die Einrichtung 2 kann nach dem Prinzip einer umgekehrten Elektrodialyse oder Reversed Electrodialysis (RED) arbeiten, um auf dem Weg einer Ladungstrennung eine Spannung bereitzustellen. Zusätzlich oder alternativ kann die Einrichtung 2 über einen im Englischen als Pressure Retarded Osmosis (PRO) bezeichneten Prozess Energie gewinnen, also über eine druckverzögerte Osmose. Die treibende Kraft ist in beiden Fällen ein Konzentrationsunterschied zwischen einer ersten Lösung 3, in welcher eine in einem Lösungsmittel wie etwa Wasser lösbare Substanz in hoher Konzentration vorliegt, und einer zweiten Lösung 4, in welcher die wenigstens eine Substanz eine geringere Konzentration aufweist oder sogar gar nicht vorhanden ist.

Bei der druckverzögerten Osmose (PRO) sind die erste Lösung 3 und die zweite Lösung 4 in der Einrichtung 2 mittels einer für das Lösungsmittel durchlässigen Membran getrennt. Dies bewirkt, dass das Lösungsmittel, vorliegend also beispielsweise das Wasser, aus der niedrig konzentrierten Lösung 4 in die hoch konzentrierte Lösung 3 einströmt. Der sich hierbei einstellende Wasserdruck kann dann zum Bereitstellen von elektrischer Energie 5 genutzt werden.

Bei der umgekehrten Elektrodialyse (RED) sorgen Lagen von abwechselnd für Anionen und Kationen durchlässigen Membranen dafür, dass sich über jeder Membran eine Spannung aufbaut und so ebenfalls elektrische Energie 5 bereitgestellt werden kann.

Vorliegend weist die Einrichtung 2 einen ersten Einlass 6 für die erste Lösung 3 auf und einen zweiten Einlass 7 für die zweite Lösung 4. Die erste Lösung 3 ist in einem ersten Vorratsbehältnis 8 gespeichert und die zweite Lösung 4 in einem zweiten Vorratsbehältnis 9. Über eine Leitung 10 ist das erste Vorratsbehältnis 8 mit dem ersten Einlass 6 verbunden, und über eine weitere Leitung 11 ist das zweite Vorratsbehältnis 9 mit dem zweiten Einlass 7 verbunden.

Zum Bereitstellen der ersten Lösung 3 und der zweiten Lösung 4 kommt vorwiegend eine thermische Trenneinrichtung 12 zum Einsatz, welche in FIG 2 näher veranschaulicht ist. Die thermische Trenneinrichtung 12 kann, wie es in FIG 1 dargestellt ist, über jeweilige Leitungen 13, 14 mit dem ersten Vorratsbehältnis 8 und dem zweiten Vorratsbehältnis 9 verbunden sein. Hierbei wird über die erste Leitung 13 die erste Lösung 3 in das erste Vorratsbehältnis 8 eingebracht und über die zweite Leitung 14 die zweite Lösung 4 in das zweite Vorratsbehältnis 9.

Vorliegend kann das Osmosekraftwerk 1 besonders aufwandsarm betrieben werden, da die thermische Trenneinrichtung 12 mit einem geringen elektrischen Energiebedarf 15 betrieben werden kann und auch ein Bedarf an Wärme 16 oder Abwärme der thermischen Trenneinrichtung 12 vergleichsweise gering ist.

Die thermische Trenneinrichtung 12 arbeitet nämlich nach einem Prinzip, bei welchem in einem Verdunster 17 eine Ausgangslösung 18 verdunstet wird, welche vorliegend in einem schematisch gezeigten Tank 19 bereitgestellt wird. Die Ausgangslösung 18 enthält hierbei wenigstens eine Substanz 20, welche mittels der thermischen Trenneinrichtung 12 in der ersten Lösung 3 aufkonzentriert wird.

Hierfür wird die Ausgangslösung 18 zunächst mittels einer Pumpe 21 einem Kondensator 22 zugeführt. Die Ausgangslösung 18 wird hierbei in dem Kondensator 22 als Kühlmedium verwendet. Hierbei erwärmt sich die Ausgangslösung 18. Zugleich wird die Temperatur eines gasförmigen Mediums wie beispielsweise von Luft in dem Kondensator 22 verringert, welches den Kondensator 22 über eine Leitung 23 zugeführt wird. Die Leitung 23 ist bevorzugt in einem oberen Bereich an den Verdunster 17 angeschlossen, in welchen die Ausgangslösung 18 eingebracht wird, nachdem die Ausgangslösung 18 in dem Kondensator 22 und mittels eines weiteren Wärmeübertragers 24 erwärmt wurde.

Die im Kondensator 22 vorgewärmte Ausgangslösung 18 wird also mittels des Wärmeübertragers 24 unter Einsatz einer externen Wärmequelle, etwa einem flüssigen oder gasförmigen Stoffstrom, weiter erhitzt. Eine Leitung 25, in welcher die Ausgangslösung 18 vom Kondensator 22 über den Wärmeübertrager 24 hin zum Verdunster 17 geleitet wird, führt zu einem im Verdunster 17 angeordneten Wasserverteiler 26. Über den Wasserverteiler 26 werden in dem Verdunster 17 angeordnete Strukturen 27, welche etwa als Gitter ausgebildet sein können, mit der aufgeheizten Ausgangslösung 18 berieselt.

Die Temperatur der in dem Verdunster 17 abwärts strömenden Ausgangslösung 18 sinkt vom Kopfbereich des Verdunsters 17, in welchem sich der Wasserverteiler 26 befindet und in welchem die Leitung 23 an den Verdunster 17 angeschlossen ist, hin zu einem Bodenbereich 28 des Verdunsters 17. Dies liegt daran, dass der Ausgangslösung 18 durch Verdunstung und Wärmeübertragung auf die Luft Wärme entzogen wird. Die Luft wird über eine Leitung 29 in den Verdunster 17 eingebracht, welche bevorzugt im Bodenbereich 28 an den Verdunster 17 angeschlossen ist. Diese Leitung 29, in welcher sich vorliegend zudem ein Gebläse 30 befindet, ist einlassseitig an einen Bodenbereich des Kondensators 22 angeschlossen.

Die Temperatur der Luft, welche im Verdunster 17 der Ausgangslösung entgegenströmt, steigt daher vom Bodenbereich 28 des Verdunsters 17 hin zum Kopfbereich des Verdunsters 17 an. Im stabilen Betrieb mit stationären Bedingungen bleibt die Temperatur der Luft aber stets unterhalb der Temperatur der Ausgangslösung 18 auf einer gegebenen Höhe des Verdunsters 17. Damit erfolgt eine Wärmeübertragung von der fallenden Ausgangslösung 18 auf die aufsteigende Luft. Entsprechend der ansteigenden Temperatur kann die Luft im Verdunster 17 zunehmend mehr Wasserdampf aufnehmen. Das Wasser in der Ausgangslösung 18 und die Luft bilden also in dem Verdunster 17 einen Gegenstrom-Wärmetauscher.

Vorliegend wird jedoch nicht lediglich Wasserdampf mit der den Verdunster 17 verlassenden Luft aus dem Verdunster 17 abgeführt. Vielmehr wird auch die Substanz 20 mittels der Luft oder eines solchen gasförmigen Mediums aus dem Verdunster 17 abgeführt. Die Substanz 20 ist nämlich derart beschaffen, dass sie flüchtig ist oder in eine flüchtige Form überführt werden kann, welche einen höheren Dampfdruck und eine geringere Verdampfungsenthalpie als Wasser aufweist. Mit anderen Worten lässt sich die Substanz 20 leichter in die Gasphase überführen als das Wasser, welches bevorzugt in der Ausgangslösung 18 als das Lösungsmittel dient.

Beispielsweise kann als die Substanz 20 Ammoniumcarbonat zum Einsatz kommen. Ammoniumcarbonat ist nämlich in Wasser gut löslich, zerfällt jedoch bei Temperaturen oberhalb von 60 °C wieder in Ammoniak und Kohlendioxid. Diese gasförmigen Komponenten können mit der Luft gut aus dem Verdunster 17 abgeführt und so zum Kondensator 22 befördert werden. In dem Kondensator 22 wird dann die mit der Luft abgeführte Substanz 20 wieder in eine Flüssigphase überführt. Im Kondensator 22 kühlt nämlich der Wasserdampf ab und es bilden sich Wassertropfen, in welchen sich der Ammoniak und das Kohlendioxid wieder lösen. So wird in dem Verdunster 17 zwar auch teilweise das Lösungsmittel in die Gasphase überführt und aus dem Verdunster abgeführt, jedoch insbesondere die Substanz 20, welche sich leichter in die Gasphase überführen lässt als das Lösungsmittel in Form des Wassers.

Über eine Auslassleitung 31 kann so aus dem Kondensator 22 die Flüssigphase in Form des Wassers mit der darin gelösten, jedoch im Vergleich zur Ausgangslösung 18 in erhöhter Konzentration vorliegenden Substanz 20 abgeführt werden. Auf diese Weise lässt sich mittels der thermischen Trenneinrichtung 12 die erste Lösung 3 bereitstellen.

Die in Bezug auf die Substanz 20 abgereicherte Ausgangslösung 18 wird nach der Passage des Verdunsters 17 über eine Leitung 32 abgeführt.

Die Ausgangslösung 18 wird bevorzugt mehrmals im Kreislauf gefahren, um einen hohen Auftrennungsgrad zu erreichen. Eine Wärmerückgewinnung erfolgt hierbei im Kondensator 22. Die in Bezug auf die Substanz 20 abgereicherte Ausgangslösung 18, welche über die Leitung 32 den Verdunster 17 verlässt, wird also bevorzugt gekühlt, damit sie erneut dem Kondensator 22 als Kühlmittel zugeführt werden kann.

In Form der den Verdunster 17 verlassenden, die Substanz 20 in geringerem Maße enthaltenden Lösung kann beispielsweise die zweite Lösung 4 bereitgestellt werden, welche in dem zweiten Vorratsbehältnis 9 bevorratet wird. Die Lösung kann jedoch auch in den Tank 19 rückgeführt und anschließend erneut dem Verdunster 17 zugeführt werden.

In dem Osmosekraftwerk 1 können auch mehrere der anhand von FIG 2 veranschaulichten thermischen Trenneinrichtungen 12 in Reihe geschaltet werden, um eine stärkere Aufkonzentration der Substanz 20 in der ersten Lösung 3 und eine entsprechende Abreicherung der Substanz 20 in der zweiten Lösung 4 zu erreichen.

Andere Substanzen 20, welche zusätzlich oder alternativ zu Ammoniumcarbonat in der Ausgangslösung 18 vorhanden sein können, können beispielsweise kleine, schwache organische und anorganische Säuren oder Basen umfassen. Diese Substanzen 20 sind in ihrer ungeladenen Form flüchtig und in ihrer korrespondierenden ionisierten Form nicht flüchtig. Im Falle kleiner, schwacher Säuren stellt die nicht-dissoziierte und damit nicht-hydratisierte Form die leicht flüchtige Spezies dar. Hier kann durch Einstellen des pH-Werts dafür gesorgt werden, dass bevorzugt die flüchtige Form vorliegt. Beispielsweise kann im Bodenbereich 28 des Verdunsters 17 durch Zugabe einer stärkeren Säure oder Base dafür gesorgt werden, dass die schwache Säure oder Base in ihrer undissoziierten Form vorliegt.

Als die wenigstens eine Substanz 20 kommen auch kleine polare organische Verbindungen in Frage, welche sich auch ohne zu dissoziieren gut in dem Lösungsmittel, vorliegend also in dem Wasser lösen. Beispielsweise gilt dies für Alkohole, welche sich ohne Umwandlung thermisch im Verdunster 17 von der Ausgangslösung 18 abtrennen und anschließend im Kondensator 22 wieder kondensieren lassen.

Neben dem Ammoniumcarbonat können daher weitere Substanzklassen wie niedermolekulare Säuren, Basen oder Alkohole in der Ausgangslösung 18 vorhanden sein.

Um die Ausgangslösung 18 besonders weitgehend zum Bereitstellen der ersten Lösung 3 zu nutzen, kann die Ausgangslösung über eine optionale Leitung 34, in welcher insbesondere eine Pumpe 35 angeordnet sein kann, vom Bodenbereich 28 des Verdunsters 17 stromaufwärts des Kondensators 22 in der thermischen Trenneinrichtung 12 rückgeführt werden. So kann insbesondere eine Kreislaufführung der Ausgangslösung 18 realisiert werden, um eine besonders weitgehende Abtrennung der Substanz 20 aus der Ausgangslösung 18 zu erreichen.

In der in Bezug auf die Substanz 20 abgereicherten Ausgangslösung 18 vorhandene Wärme kann hierbei mittels eines weiteren Wärmeübertragers 33 abgeführt werden, welcher in der Leitung 34 angeordnet ist. Der Wärmeübertrager 33 dient dazu, die abgereicherte Ausgangslösung 18 zu kühlen, so dass sie in dem Kondensator 22 als Kühlmittel genutzt werden kann. Des Weiteren kann so ein Teil der Wärme, welche der Ausgangslösung 18 mittels des Wärmeübertragers 24 vor deren Eintritt in den Verdunster 17 zugeführt wird, für andere Prozesse genutzt werden.

Nach mehreren Kreisläufen der Ausgangslösung 18 durch den Verdunster 17 ist die Konzentration der Substanz 20 im Tank 19 soweit erniedrigt, dass der Batchprozess beendet werden kann.

Es kann dann auch nur ein Teil der in Bezug auf die Substanz 20 abgereicherten Lösung aus dem Tank 19 abgezogen und entsprechend neue Ausgangslösung 18 nachgespeist werden. So kann der Prozess quasi kontinuierlich gestaltet werden.

In dem Osmosekraftwerk 1 kann das in der Einrichtung 2 durch den Ausgleich der Konzentrationen der ersten Lösung 3 und der zweiten Lösung 4 erhaltene Gemisch wieder als die Ausgangslösung 18 eingesetzt werden, welche in dem Osmosekraftwerk 1 der thermischen Trenneinrichtung 12 zugeführt wird. Die Möglichkeit eines solchen Kreisprozesses ist in FIG 1 durch einen Pfeil 36 veranschaulicht.

Die Investitionskosten und die Betriebskosten der thermischen Trenneinrichtung 12 sind besonders niedrig. Dies liegt insbesondere daran, dass die thermische Trenneinrichtung 12 bei Umgebungsdruck betrieben wird. Zudem ist der Bedarf an elektrischer Energie gering, wie auch die sonstigen Betriebskosten. Auch zeichnet sich die thermische Trenneinrichtung 12 durch einen besonders geringen Wartungsaufwand aus.

## Patentansprüche

1. Verfahren zum Betreiben eines Osmosekraftwerks (1), bei welchem eine erste Lösung (3) mit einer ersten Konzentration wenigstens einer in einem Lösungsmittel der ersten Lösung (3) lösbaren Substanz (20) und eine zweite Lösung (4) bereitgestellt werden, welche eine zweite, geringere Konzentration der wenigstens einen Substanz (20) aufweist, wobei zumindest die erste Lösung (3) mittels wenigstens einer thermischen Trenneinrichtung (12) bereitgestellt wird,
**dadurch gekennzeichnet, dass**
in der wenigstens einen thermischen Trenneinrichtung (12) eine die wenigstens eine Substanz (20) enthaltende Ausgangslösung (18) in einen Verdunster (17) eingebracht wird, welcher von einem gasförmigen Medium durchströmt wird, wobei das gasförmige Medium im Verdunster (17) der Ausgangslösung (18) entgegenströmt, sodass das Lösungsmittel der Ausgangslösung (18) und das gasförmige Medium in dem Verdunster (17) einen Gegenstrom-Wärmetauscher bilden, wobei in einem Kondensator (22) der wenigstens einen thermischen Trenneinrichtung (12) die Ausgangslösung (18) als Kühlmittel zum Kühlen des die wenigstens eine Substanz (20) enthaltenden gasförmigen Mediums verwendet wird, wobei eine Temperatur der von dem Kondensator (22) kommenden Ausgangslösung (18) erhöht wird und die Ausgangslösung (18), welche die erhöhte Temperatur aufweist, im Gegenstrom zu dem gasförmigen Medium in dem Verdunster (17) verrieselt wird, wobei die wenigstens eine Substanz (20) mittels des gasförmigen Mediums aus dem Verdunster (17) abgeführt wird, wobei die wenigstens eine in dem gasförmigen Medium abgeführte Substanz (20) in dem Kondensator (22) in eine Flüssigphase überführt wird, um die erste Lösung (3) bereitzustellen, und wobei in der Ausgangslösung (18) als die wenigstens eine Substanz (20) eine derartige verwendet wird, welche sich leichter in die Gasphase überführen lässt als das Lösungsmittel der Ausgangslösung (18).

2. Verfahren nach Anspruch 1, **dadurch gekennzeichnet, dass** als das Lösungsmittel der Ausgangslösung (18) Wasser und als die wenigstens eine Substanz (20) Ammoniumcarbonat und/oder wenigstens eine Säure oder Base und/oder wenigstens eine polare organische Verbindung verwendet werden.

3. Verfahren nach Anspruch 2, **dadurch gekennzeichnet, dass** bei Verwendung der wenigstens einen Säure oder Base der pH-Wert in der wenigstens einen thermischen Trenneinrichtung (12) derart eingestellt wird, dass im Verdunster (17) ein größerer Anteil der wenigstens einen Säure oder Base in ihrer nicht-dissoziierten Form vorliegt als ohne das Einstellen des pH-Werts.

4. Verfahren nach Anspruch 3, **dadurch gekennzeichnet, dass** der pH-Wert in dem Verdunster (17) durch Zugabe einer weiteren Säure oder Base eingestellt wird, welche eine größere Säurestärke oder Basenstärke aufweist als die der wenigstens einen Substanz (20).

5. Verfahren nach einem der Ansprüche 1 bis 4, **dadurch gekennzeichnet, dass** das Lösungsmittel nach einem Passieren des Verdunsters (17) auf eine Temperatur gekühlt wird, welche niedriger ist als eine Temperatur des gasförmigen Mediums, welches vom Kondensator (22) kommend in einem Bodenbereich (28) in den Verdunster (17) eingebracht wird.

6. Verfahren nach einem der Ansprüche 1 bis 5, **dadurch gekennzeichnet, dass** die aus dem Verdunster (17) abgeführte, in Bezug auf die wenigstens eine Substanz (20) abgereicherte Ausgangslösung (18) zum Bereitstellen der zweiten Lösung (4) verwendet wird.

7. Verfahren nach einem der Ansprüche 1 bis 6, **dadurch gekennzeichnet, dass** die wenigstens eine thermische Trenneinrichtung (12) mit einem Druck betrieben wird, welcher einem Druck in der Umgebung der wenigstens einen thermischen Trenneinrichtung (12) entspricht.

8. Verfahren nach einem der Ansprüche 1 bis 7, **dadurch gekennzeichnet, dass** zumindest die erste Lösung (3) mittels wenigstens zweier thermischer Trenneinrichtungen (12) bereitgestellt wird, wobei die aus dem Kondensator einer ersten Trenneinrichtung (12) stammende, in Bezug auf die wenigstens eine Substanz (20) angereicherte Lösung dem Verdunster (17) einer zweiten Trenneinrichtung (12) als Ausgangslösung (18) zugeführt wird.

9. Verfahren nach einem der Ansprüche 1 bis 8, **dadurch gekennzeichnet, dass** die erste Lösung (3) und die zweite Lösung (4) einer Einrichtung (2) zugeführt werden, in welcher mittels einer umgekehrten Elektrodialyse und/oder mittels einer druckverzögerten Osmose Energie gewonnen wird.

10. Osmosekraftwerk mit einer Einrichtung (2) welche einen ersten Einlass (6) für eine erste Lösung (3) mit einer ersten Konzentration wenigstens einer in einem Lösungsmittel der ersten Lösung (3) lösbaren Substanz (20) und einen zweiten Einlass (7) für eine zweite Lösung (4) aufweist, welche eine zweite, geringere Konzentration der wenigstens einen Substanz (20) aufweist, wobei der erste Einlass (6) mit einem ersten Vorratsbehältnis (8) für die erste Lösung (3) und der zweite Einlass (7) mit einem zweiten Vorratsbehältnis (9) für die zweite Lösung (4) verbunden ist, wobei zumindest das erste Vorratsbehältnis (8) mit wenigstens einer thermischen Trenneinrichtung (12) verbunden ist,
**dadurch gekennzeichnet, dass**
in einem Verdunster (17) der wenigstens einen thermischen Trenneinrichtung (12) eine die wenigstens eine Substanz (20) enthaltende Ausgangslösung (18) und ein gasförmiges Medium vorhanden sind, wobei das Lösungsmittel der Ausgangslösung (18) und das gasförmige Medium in dem Verdunster (17) einen Gegenstrom-Wärmetauscher bilden, wobei in einem Kondensator (22) der wenigstens einen thermischen Trenneinrichtung (12) die Ausgangslösung (18) als Kühlmittel zum Kühlen des die wenigstens eine Substanz (20) enthaltenden gasförmigen Mediums verwendbar ist, wobei in einer Leitung (25), über welche die Ausgangslösung (18) vom Kondensator (22) hin zu dem Verdunster (17) geleitet werden kann, ein Wärmeübertrager (24) angeordnet ist, welcher dazu ausgebildet ist, eine Temperatur der von dem Kondensator (22) kommenden Ausgangslösung (18) zu erhöhen, wobei die Ausgangslösung (18), welche die erhöhte Temperatur aufweist, im Gegenstrom zu dem gasförmigen Medium in dem Verdunster (17) verrieselbar ist, wobei die wenigstens eine Substanz (20) mittels des gasförmigen Mediums aus dem Verdunster (17) abführbar ist, wobei der Verdunster (17) mit dem Kondensator (22) verbunden ist, welcher dazu ausgebildet ist, die wenigstens eine in dem gasförmigen Medium abgeführte Substanz (20) in eine Flüssigphase zu überführen, um die erste Lösung (3) bereitzustellen, und wobei in der Ausgangslösung (18) als die wenigstens eine Substanz (20) eine derartige vorhanden ist, welche sich leichter in die Gasphase überführen lässt als das Lösungsmittel der Ausgangslösung (18).

## Claims

1. Method for operating an osmotic power plant (1), in which there are provided a first solution (3), having a first concentration of at least one substance (20) that can be dissolved in a solvent of the solution (3), and a second solution (4), which has a second, lesser concentration of the at least one substance (20), wherein at least the first solution (3) is provided by means of at least one thermal separating facility (12),
**characterized in that**,
in the at least one thermal separating facility (12), a starting solution (18) that contains the at least one substance (20) is introduced into an evaporator (17), through which there flows a gaseous medium, wherein the gaseous medium in the evaporator (17) flows counter to the starting solution (18), such that the solvent of the starting solution (18) and the gaseous medium in the evaporator (17) form a counterflow heat exchanger, wherein, in a condenser (22) of the at least one thermal separating facility (12), the starting solution (18) is used as a coolant for cooling the gaseous medium containing the at least one substance (20), wherein a temperature of the starting solution (18) coming from the condenser (22) is increased, and the starting solution (18) having the increased temperature is trickled in a counterflow in relation to the gaseous medium in the evaporator (17), wherein the at least one substance (20) is discharged out of the evaporator (17) by means of the gaseous medium, wherein the at least one substance (20) that is discharged in the gaseous medium is converted to a liquid phase in the condenser (22), in order to provide the first solution (3), and wherein used as the at least one substance (20) in the starting solution (18) is one that can more easily be converted to the gas phase than the solvent of the starting solution (18).

2. Method according to Claim 1, **characterized in that** water is used as the solvent of the starting solution (18), and ammonium carbonate and/or at least one acid or base and/or at least one polar organic compound is/are used as the at least one substance (20).

3. Method according to Claim 2, **characterized in that**, if the at least one acid or base is used, the pH value in the at least one thermal separating facility (12) is set in such a manner that a greater proportion of the at least one acid or base is present in its non-dissociated form in the evaporator (17) than without the setting of the pH value.

4. Method according to Claim 3, **characterized in that** the pH value in the evaporator (17) is set by addition of a further acid or base that has a greater acid strength or base strength than the at least one substance (20).

5. Method according to any one of Claims 1 to 4, **characterized in that** the solvent, after passing through the evaporator (17), is cooled to a temperature that is lower than a temperature of the gaseous medium that, coming from the condenser (22), is introduced into the evaporator (17), in a bottom region (28).

6. Method according to any one of Claims 1 to 5, **characterized in that** the starting solution (18) discharged out of the evaporator (17), depleted with respect to the at least one substance (20), is used to provide the second solution (4).

7. Method according to any one of Claims 1 to 6, **characterized in that** the at least one thermal separating facility (12) is operated at a pressure that corresponds to a pressure in the environment of the at least one thermal separating facility (12).

8. Method according to any one of Claims 1 to 7, **characterized in that** at least the first solution (3) is provided by means of at least two thermal separating facilities (12), wherein the solution originating from the condenser of a first separating facility (12), enriched with respect to the at least one substance (20), is supplied as a starting solution (18) to the evaporator (17) of a second separating facility (12) .

9. Method according to any one of Claims 1 to 8, **characterized in that** the first solution (3) and the second solution (4) are supplied to a facility (2) in which energy is obtained by means of a reversed electrodialysis and/or by means of a pressure retarded osmosis.

10. Osmotic power plant having a facility (2) that has a first inlet (6) for a first solution (3) having a first concentration of at least one substance (20) that is soluble in a solvent of the first solution (3), and a second inlet (7) for a second solution (4) that has a second, lesser concentration of the at least one substance (20), wherein the first inlet (6) is connected to a first reservoir (8) for the first solution (3), and the second inlet (7) is connected to a second reservoir (9) for the second solution (4), wherein at least the first reservoir (8) is connected to at least one thermal separating facility (12),
**characterized in that**
a starting solution (18), containing the at least one substance (20), and a gaseous medium are present in an evaporator (17) of the at least one thermal separating facility (12), wherein the solvent of the starting solution (18) and the gaseous medium in the evaporator (17) form a counterflow heat exchanger, wherein, in a condenser (22) of the at least one thermal separating facility (12), the starting solution (18) can be used as a coolant for cooling the gaseous medium containing the at least one substance (20), wherein a heat exchanger (24) designed to increase a temperature of the starting solution (18) coming from the condenser (22) is arranged in a line (25) via which the starting solution (18) can be carried from the condenser (22) toward the evaporator (17), wherein the starting solution (18) having the increased temperature can be trickled in a counterflow in relation to the gaseous medium in the evaporator (17), wherein the at least one substance (20) can be discharged out of the evaporator (17) by means of the gaseous medium, wherein the evaporator (17) is connected to the condenser (22), which is designed to convert the at least one substance (20), that is discharged in the gaseous medium, to a liquid phase, in order to provide the first solution (3), and wherein used as the at least one substance (20) in the starting solution (18) is one that can more easily be converted to the gas phase than the solvent of the starting solution (18).

## Revendications

1. Procédé pour faire fonctionner une centrale (1) électrique à osmose, dans lequel on se procure une première solution (3) ayant une première concentration d'au moins une substance (20) soluble dans un solvant de la première solution (3) et une deuxième solution (4), qui a une deuxième concentration plus petite de la au moins une substance (20), dans lequel on se procure au moins la première solution (3) au moyen d'au moins un dispositif (12) de séparation thermique,
**caractérisé en ce que**
dans le au moins un dispositif (12) de séparation thermique, on introduit une solution (18) de départ, contenant la au moins une substance (20), dans un évaporateur (17), dans lequel passe un fluide gazeux, le fluide gazeux passant dans l'évaporateur (17), en sens opposé à la solution (18) de départ, de sorte que le solvant de la solution (18) de départ et le fluide gazeux forment dans l'évaporateur (17) un échangeur de chaleur à contre-courant, dans lequel, dans un condenseur (22) du au moins un dispositif (12) de séparation thermique, on utilise la solution (18) de départ comme fluide réfrigérant pour refroidir le fluide gazeux contenant la au moins une substance (20), une température de la solution (18) de départ, arrivant du condenseur (22), étant élevée et la solution (18) de départ, qui a la température élevée, étant envoyée à contre-courant du fluide gazeux dans l'évaporateur (17), la au moins une substance (20) étant évacuée de l'évaporateur (17) au moyen du fluide gazeux, la au moins une substance (20) évacuée dans le fluide gazeux passant dans le condenseur (22) en phase liquide, pour disposer de la première solution (3), et dans lequel, dans la solution (18) de départ, on utilise, comme la au moins une substance (20), une substance telle qu'elle peut passer plus facilement dans la phase gazeuse que le solvant de la solution (18) de départ.

2. Procédé suivant la revendication 1, **caractérisé en ce que**, comme solvant de la solution (18) de départ, on utilise de l'eau, et comme la au moins une substance, du carbonate d'ammonium et/ou au moins un acide ou une base et/ou au moins un composé organique polaire.

3. Procédé suivant la revendication 2, **caractérisé en ce que**, lorsque l'on utilise le au moins un acide ou une base, on règle le pH dans le au moins un dispositif (12) de séparation thermique, de manière à avoir, dans l'évaporateur (17), une proportion plus grande du au moins un acide ou une base dans sa forme non dissociée que sans le réglage du pH.

4. Procédé suivant la revendication 3, **caractérisé en ce que** l'on règle le pH dans l'évaporateur (17) par addition d'un autre acide ou d'une autre base, qui a une force d'acide ou une force de base plus grande que la au moins une substance (20).

5. Procédé suivant l'une des revendications 1 à 4, **caractérisé en ce que** l'on refroidi le solvant après un passage dans l'évaporateur (17) à une température qui est plus basse qu'une température du fluide gazeux, qui est introduit en venant du condenseur (22) dans une partie (28) de fond de l'évaporateur (17).

6. Procédé suivant l'une des revendications 1 à 5, **caractérisé en ce que** l'on utilise, pour préparer la deuxième solution (4), la solution (18) de départ, évacuée de l'évaporateur (17) et appauvrie en la au moins une substance (20).

7. Procédé suivant l'une des revendications 1 à 6, **caractérisé en ce que** l'on fait fonctionner le au moins un dispositif (12) de séparation thermique sous une pression, qui correspond à la pression dans ce qui entoure le au moins un dispositif (12) de séparation thermique.

8. Procédé suivant l'une des revendications 1 à 7, **caractérisé en ce que** l'on prépare au moins la première solution (3) au moyen d'au moins deux dispositifs (12) de séparation thermique, la solution, provenant du condenseur d'un premier dispositif (12) de séparation et enrichie en la au moins une substance (20), étant envoyée comme solution (18) de départ à l'évaporateur (17) d'un deuxième dispositif (12) de séparation.

9. Procédé suivant l'une des revendications 1 à 8, **caractérisé en ce que** l'on envoie la première solution (3) et la deuxième solution (4) à un dispositif (2), dans lequel on obtient de l'énergie au moyen d'une électrodialyse inverse et/ou au moyen d'une osmose à pression retardée.

10. Centrale électrique à osmose, comprenant un dispositif (2), qui a une première entrée (6) pour une première solution (3) ayant une première concentration d'au moins une substance (20) soluble dans un solvant de la première solution (3) et une deuxième entrée (7) pour une deuxième solution (4), qui a une deuxième concentration plus petite de la au moins une substance (20), la première entrée (6) étant reliée à un premier réservoir (8) pour la première solution et la deuxième entrée (7) à un deuxième réservoir (9) pour la deuxième solution (4), au moins le premier réservoir (8) étant relié à au moins un dispositif (12) de séparation thermique,
**caractérisé en ce que**
dans un évaporateur (17) du au moins un dispositif (12) de séparation thermique, sont présents une solution (18) de départ, contenant la au moins une substance (20), et un fluide gazeux, le solvant de la solution (18) de départ et le fluide gazeux formant, dans l'évaporateur (17), un échangeur de chaleur à contre-courant, dans lequel, dans un condenseur (22) du au moins un dispositif (12) de séparation thermique, la solution (18) de départ peut être utilisée comme fluide réfrigérant pour refroidir le fluide gazeux contenant la au moins une substance (20), dans laquelle, dans un conduit (25), par lequel la solution (18) de départ peut être conduite du condenseur (22) à l'évaporateur (17), est monté un échangeur de chaleur (24), constitué de manière à élever une température de la solution (18) de départ venant du condenseur (22), la solution (18) de départ, qui a la température élevée, pouvant passer à contre-courant du fluide gazeux dans l'évaporateur (17), la au moins une substance (20) étant évacuée de l'évaporateur (17) au moyen du fluide gazeux, l'évaporateur (17) étant relié au condenseur (22), qui est constitué pour faire passer en phase liquide la au moins une substance (20) évacuée dans le fluide gazeux, afin de préparer la première solution (3), et dans laquelle, dans la solution (18) de départ, il y a, comme la au moins une substance (20), une substance, qui peut passer plus facilement dans la phase gazeuse que le solvant de la solution (18) de départ.
